# EUROPÄISCHE PATENTSCHRIFT

(11) **EP 1 281 553 B1**
(45) Veröffentlichungstag und Bekanntmachung des Hinweises auf die Patenterteilung: **18.10.2006**
(21) Anmeldenummer: 02015049.6
(22) Anmeldetag: 05.07.2002
(51) Int. Cl.: B60J 7/20

(54) **Traggestell für den Heckdeckel des Heckraumes eines Fahrzeuges**
Frame for the cover lid of a trunk of a vehicle
Bâti pour la portière de la malle arrière d'un véhicule

(30) Priorität: 30.07.2001 DE 10137018
(43) Veröffentlichungstag der Anmeldung: 05.02.2003
(73) Patentinhaber: DaimlerChrysler AG, 70567 Stuttgart (DE)
(72) Erfinder: Zipperle, Siegfried, 71134 Aidlingen (DE)

(56) Entgegenhaltungen:
- DE-A- 19 946 454
- DE-C- 4 445 944
- DE-C- 19 516 877
- US-A1- 2002 093 218
- PATENT ABSTRACTS OF JAPAN vol. 2000, no. 11, 3. Januar 2001 (2001-01-03) & JP 2000 211373 A (TAKADA KOGYO KK), 2. August 2000 (2000-08-02)
- PATENT ABSTRACTS OF JAPAN vol. 2000, no. 21, 3. August 2001 (2001-08-03) & JP 2001 113953 A (AISIN SEIKI CO LTD;TOYOTA MOTOR CORP), 24. April 2001 (2001-04-24)

## Beschreibung

Die Erfindung betrifft ein Traggestell eines um eine vordere Querachse sowie eine hintere Querachse aufschwenkbaren Heckdeckels eines zur Aufnahme eines Daches bzw. Dachteiles sowie von Gepäck dienenden Heckraumes einer Karosserie eines Personenkraftwagens mit wegklappbarem Dach bzw. Dachteil mit
- in Draufsicht U-förmigem Rahmen mit in Querrichtung ausgerichtetem, am Heck der Karosserie angeordnetem Mittelteil und um die hintere Querachse schwenkbaren U-Schenkeln und
- an den U-Schenkeln um die vordere Querachse schwenkbaren Tragteilen des Heckdeckels.

Ein derartiges Traggestell ist Gegenstand der DE 195 16 877 C1. Es bietet die Möglichkeit, den Heckdeckel einerseits unter Schwenkung um die hintere Querachse zu öffnen, um das wegklappbare Dachteil bzw. Dach im Raum unter dem Heckdeckel abzulegen. Andererseits kann der Heckdeckel um die vordere Querachse aufgeschwenkt werden, um den Heckraum der Karosserie mit Gepäck zu beladen.

Nach der DE 195 16 877 C1 ist der Mittelteil des U-förmigen Rahmens unmittelbar an karosseriefesten Gelenken nahe des Oberrandes eines heckseitigen Stoßfängers der Karosserie um die hintere Schwenkachse schwenkbar gelagert. Damit wird zwar eine konstruktiv einfache und stabile Halterung des U-förmigen Rahmens gewährleistet. Jedoch muß eine gewisse Einschränkung bei der Freiheit der Gestaltung der Karosserie in Kauf genommen werden.

Deshalb ist es Aufgabe der Erfindung, ein Traggestell zu schaffen, welches bei der Ausgestaltung der Karosserie weitergehende Spielräume gewährt.

Diese Aufgabe wird bei einem Traggestell der eingangs angegebenen Art durch eine den Rahmen halternde und bei Aufschwenkung der Heckklappe um die hintere Querachse bzw. bei entsprechender Schwenkung der U-Schenkel zunächst anhebende Hub-Kipp-Führung.

Die Erfindung beruht auf dem allgemeinen Gedanken, die kinematischen Verhältnisse des Traggestelles bei einer Schwenkung der Heckklappe um die hintere Querachse dahingehend zu verändern, daß die Heckklappe zunächst eine im wesentlichen translatorische Hubbewegung ausführt, durch die die Fuge zwischen dem Rand der Heckklappe und angrenzenden stationären Teilen der Karosserie verbreitert wird, so daß für die darauffolgende Schwenkbewegung mehr Freiraum zur Verfügung steht und die angrenzende stationäre Karosserie nicht als Störkontur bei der Kippbewegung berücksichtigt werden muß. Damit wird sowohl bezüglich der Gestaltung der Heckklappe als auch bezüglich der Gestaltung der angrenzenden stationären Karosserieteile eine deutlich höhere Freiheit geboten.

Gemäß einer besonders bevorzugten Ausführungsform der Erfindung kann die Hub-Kipp-Führung als Viergelenksystem mit zwei zu den Querachsen parallelen Gelenkachsen an einem stationären Teil der Karosserie und zwei dazu parallelen Gelenkachsen an einem rahmenfesten Teil bzw. am Rahmen ausgebildet sein, wobei eine die karosserieseitigen Gelenkachsen in Achsansicht durchsetzende erste Gerade und eine die rahmenseitigen Gelenkachsen durchsetzende zweite Gerade einen nach oben geöffneten Winkel bilden, zwischen der oberen Gelenkachse am stationären Teil der Karosserie und der oberen Gelenkachse am rahmenfesten Teil bzw. am Rahmen ein erster Lenker und zwischen den beiden anderen Gelenkachsen ein gegenüber dem ersten Lenker verkürzter zweiter Lenker angeordnet ist und der Rahmen mittels eines Stellaggregates mit einem Drehmoment bezüglich der beiden rahmenseitigen Gelenkachsen beaufschlagbar ist.

Ein solches Gelenksystem bietet die Möglichkeit einer Anordnung, bei der die rahmenseitigen Gelenkachsen in Ausgangs- bzw. Ruhelage des Rahmens etwa senkrecht übereinander und tiefer als die korrespondierenden karosserieseitigen Achsen liegen und die Lenker dementsprechend einen vergleichsweise großen Schwenkhub ohne nennenswerte Kippbewegung des Rahmens ausführen können, der dann bei dem vorgenannten Schwenkhub eine deutliche Hubbewegung ausführt. Wenn nun das Stellaggregat bei der Hub-Kipp-Bewegung auf den Rahmen ein in Schwenkrichtung der Lenker ausgerichtetes Drehmoment ausübt, wird zwangsläufig zunächst die genannte Hubbewegung ausgeführt, die zunehmend mit einer gewissen Schwenkbewegung überlagert wird, bei der zunächst beide Lenker eine gleichgerichtete Schwenkbewegung ausführen, bis der untere Lenker eine Lage erreicht, in der die untere karosserieseitige Gelenkachse und beide rahmenseitigen Gelenkachsen in Achsansicht auf einer Geraden liegen. Bei weiterer Betätigung des Stellaggregates führen dann die Lenker zueinander gegenläufige Schwenkungen aus, mit der Folge, daß kaum noch eine weitere Hubbewegung des Rahmens erfolgt und statt dessen eine verstärkte Kippbewegung auftritt.

Damit die Lenker in einer gemeinsamen Ebene angeordnet werden können und sich das Viergelenksystem mit geringer Breite in Achsrichtung der Gelenkachsen ausbilden läßt, ist zweckmäßig vorgesehen, den oberen Lenker als Winkelhebel mit nach abwärts geöffneter Winkelöffnung bzw. als bogenförmigen Hebel mit nach abwärts gerichteter Konkavseite auszubilden. Damit kann die untere rahmenseitige Gelenkachse die Verbindungslinie zwischen der oberen karosserieseitigen und der oberen rahmenseitigen Gelenkachse überqueren, wie es für einen ausgeprägten Kipphub des Rahmens erwünscht ist.

Im Hinblick auf möglichst große störkonturenfreie Nutzräume im Heckraum der Karosserie haben die U-Schenkel des Rahmens in Seitenansicht der Karosserie L-Form, welche sich vorzugsweise eng an die in Seitenansicht der Karosserie L-förmige Heckklappe anschmiegt.

Hier wird der allgemeine Gedanke verwirklicht, wesentliche Strukturteile des Traggestells in enger Nachbarschaft des Randes der geschlossenen Heckklappe anzuordnen, so daß innerhalb des Heckraumes unterhalb der U-Schenkel noch gut nutzbare Räume nahe der Karosserieseitenwände zur Verfügung stehen. Beispielsweise können in diese Räume ein oder zwei etwa in Richtung der Karosseriequerachse ausgerichtete Golfbags eingeschoben werden.

Im übrigen wird hinsichtlich bevorzugter Merkmale der Erfindung auf die Ansprüche sowie die nachfolgende Erläuterung der Zeichnung verwiesen, anhand der eine besonders bevorzugte beispielshafte Ausführungsform der Erfindung näher beschrieben wird.

Dabei zeigt
- Fig. 1: eine Seitenansicht des Traggestells in seinem Zustand bei geschlossenem Heckdeckel,
- Fig. 2: eine der Fig. 1 entsprechende Seitenansicht des Traggestells im Zustand des um die hintere Querachse aufgeschwenkten Heckdeckels,
- Fig. 3: eine weitere Seitenansicht des Traggestells im Zustand des um die vordere Querachse aufgeschwenkten Heckdeckels und
- Fig. 4: eine stark schematisierte Darstellung des als Hub-Kipp-Führung dienenden Viergelenksystems.

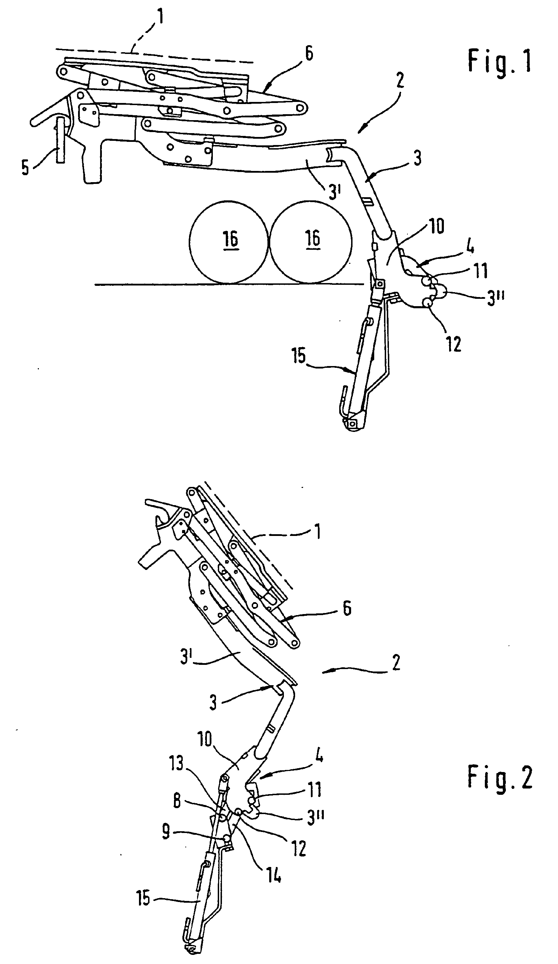

Gemäß den Fig. 1 bis 3 ist ein nur ausschnittsweise und schematisiert strichliert dargestellter Heckdeckel 1 einer im übrigen nicht dargestellten Karosserie eines Personenkraftwagens mit wegklappbarem Dach auf einem Traggestell 2 angeordnet. Dieses besitzt ein Hauptstrukturteil in Form eines in Draufsicht auf die Karosserie U-förmigen Rahmens 3, dessen U-Schenkel 3' in Seitenansicht der Karosserie L-förmig ähnlich der Kontur des in Seitenansicht ebenfalls L-förmigen Heckdeckels 1 ausgebildet sind. Diese U-Schenkel 3' sind über ein Mittelteil 3" des U-Rahmens 3 verwindungssteif miteinander verbunden.

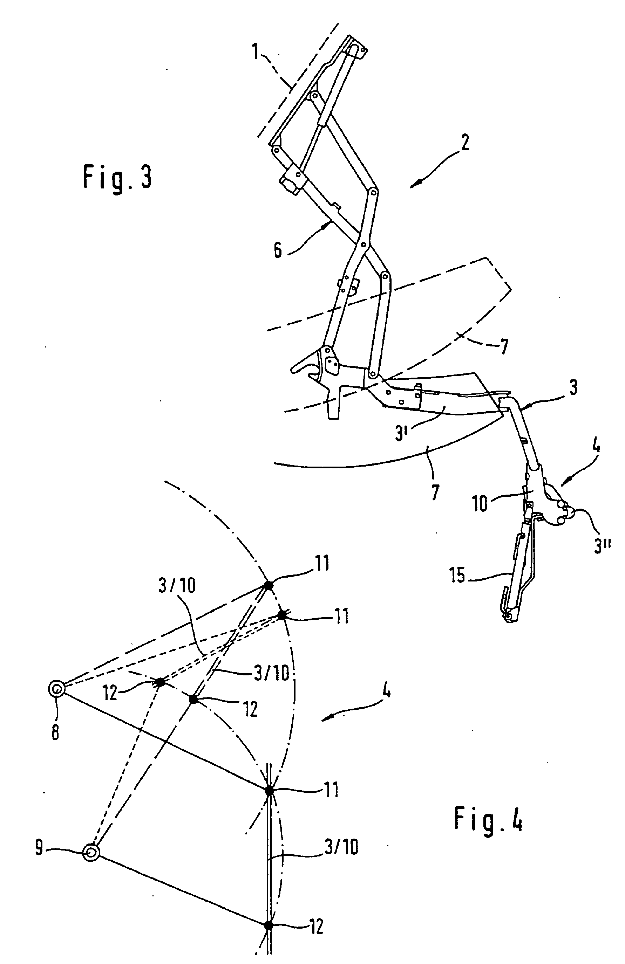

Im Übergangsbereich zum Mittelteil 3" sind an den U-Schenkeln 3' als Viergelenksysteme 4 ausgebildete Hub-Kipp-Führungen angeordnet, an denen sich der U-Rahmen 3 aus der Ruhelage der Fig. 1 in die Lage gemäß Fig. 2 hochschwenken läßt, wenn in Fig. 1 dargestellte Verriegelungen 5 gelöst werden, mit den die vom Mittelteil 3" entfernten Enden der U-Schenkel 3' an karosseriefesten Teilen festlegbar sind. In der Stellung der Fig. 2 kann ein Dach bzw. Dachteil 7 (vgl. Fig. 3) in dem Raum unter dem Heckdecle 1 abgelegt bzw. aus diesem Raum herausbewegt werden.

Die Konstruktion des Viergelenksystems 4 wird weiter unten erläutert.

Im übrigen sind auf den U-Schenkeln 3' jeweils scherenartige Lenkersysteme 6 angeordnet, die eine Hub-Kipp-Bewegung des Heckdeckels 1 aus der Schließlage der Fig. 1 in die Offenstellung der Fig. 3 ermöglichen. In dieser Stellung des Heckdeckels 1 kann der darunter befindliche Karosserieraum mit Gepäck beladen werden.

Sollte zuvor unter dem Heckdeckel 1 das Dach bzw. Dachteil 7 des Fahrzeuges abgelegt worden sein, kann dieses gegebenenfalls aus der in Fig. 3 mit durchgezogenen Linien dargestellten Ablageposition vorübergehend in die strichliert dargestellte Beladehilfsstellung geschwenkt werden, um das Gepäck leichter unterhalb des abgelegten Daches 7 unterbringen zu können.

Jedes der jeweils einem der U-Schenkel 3' zugeordneten Viergelenksysteme 4 besitzt zwei karosseriefeste Gelenksachsen 8 und 9 sowie zwei am Rahmen 3 bzw. an einer damit fest verbundenen Beschlagsanordnung 10 angeordnete rahmenfeste Gelenksachsen 11 und 12, wobei die obere karosseriefeste Gelenksachse 8 über einen Lenker 13 mit der oberen rahmenfesten Gelenksachse 11 und die untere karosseriefeste Gelenkachse 9 über einen Lenker 14 mit der unteren rahmenfesten Gelenkachse 12 verbunden ist.

Dabei kann der obere Lenker 13 als bogen- oder winkelförmiger Lenker mit nach unten weisender Winkelöffnung bzw. Konkavseite ausgebildet sein.

An zumindest einem der beiden Viergelenksysteme 4 ist zwischen einem, von den rahmenfesten Gelenkachsen 11 und 12 entfernten Anlenkpunkt an der Beschlagsanordnung 10, und einem karosseriefesten Widerlager ein pneumatischer oder hydraulischer Stellzylinder 15 angeordnet, um den Rahmen 3 zwischen den Positionen der Fig. 1 und 2 verstellen zu können.

Wenn sich der Rahmen 3 in der Position der Fig. 1 befindet, bilden eine die karosseriefesten Gelenkachsen 11 und 12 in Seitenansicht der Karosserie durchsetzenden Gerade und eine die rahmenfesten Gelenkachsen 13 und 14 durchsetzende Gerade einen nach oben geöffneten Winkel, wobei die rahmenfesten Gelenkachsen 11 und 12 etwa vertikal übereinander liegen, vgl. Fig. 4.

Wenn nun der Stellzylinder 15 nach Öffnen der Verriegelungen 5 (vgl. Fig. 1) ausgefahren wird, führen zunächst die Beschlagsanordnungen 10 und damit der Rahmen 3 eine praktisch reine Translationsbewegung in Vertikalrichtung nach oben aus.

Bei zunehmender Hubhöhe wird diese Translationsbewegung von einer Schwenkbewegung im Uhrzeigersinn überlagert.

Wird der Stellzylinder 15 weiter ausgefahren, erreichen die Viergelenksysteme 4 eine Position, in der die rahmenfesten Gelenkachsen 11 und 12 und die untere karosseriefeste Gelenkachse 9 auf einer Geraden liegen (vgl. Figur 4). Wenn jetzt der Stellzylinder 15 noch etwas weiter ausgefahren wird, führt der Rahmen 3 eine praktisch reine Schwenkbewegung um eine virtuelle Schwenkachse zwischen den rahmenseitigen Gelenkachsen 11 und 12 aus, wobei sich die obere rahmenseitige Gelenkachse 11 etwas nach schräg abwärts bewegt und die untere rahmenseitige Gelenkachse 12 die Verbindungslinie zwischen den beiden oberen Gelenkachsen 8 und 11 überqueren kann, wie es durch die winkelförmige bzw. bogenförmige Ausbildung des oberen Lenkers 13 ermöglicht wird.

Auf diese Weise kann die in Fig. 2 dargestellte angehobene und im Uhrzeigersinn verschwenkte Lage des Traggestells 2 erreicht werden, in der der Vorderbereich des Heckdeckels 1 weit nach oben geöffnet ist und das zusammenklappbare Dach 7 in den vom Heckdeckel 1 albschließbaren Karosserieraum eingefahren bzw. aus diesem Karosserieraum herausbewegt werden kann.

Wird nachfolgend der Stellzylinder 15 wieder eingefahren, wird der Rahmen 3 in die Lage der Fig. 1 zurückgeführt und erneut mit den Verriegelungen 5 festgelegt.

Da die von der Lage der Fig. 1 in die Lage der Fig. 2 führende Öffnungsbewegung des Rahmens 3 bzw. des Heckdeckels 1 als Hub-Kipp-Bewegung ausgelegt ist, wird zunächst der Spalt, welcher zwischen dem Rand des Heckdeckels 1 und angrenzenden stationären Teilen der Karosserie vorliegt, deutlich verbreitert, bevor die eigentliche Schwenkbewegung des Heckdeckels 1 bzw. des Rahmens 3 einsetzt. Dies bietet den Vorteil, daß bei der Gestaltung des Heckdeckels 1 sowie der übrigen Karosserie eine große Freiheit besteht, weil an den Heckdeckel 1 angrenzende Karosserieteile praktisch nicht als Störkontur bei der Schwenkbewegung des Heckdeckels 1 wirken können.

Die an die L-förmige Seitenansicht des Heckdeckels 1 angenäherte Form der U-Schenkel 3' bietet den Vorteil, daß in der Lage der Fig. 1 und 3 des Rahmens 3 unter den U-Schenkeln 3' gut zugängliche und nutzbare Räume verbleiben, in die beispielsweise zwei Golfbags 16 eingeschoben werden können. Auf diese Weise wird der nutzbare Gepäckraum an den Karosserieseitenwänden deutlich erweitert.

## Patentansprüche

1. Traggestell (2) eines um eine vordere Querachse sowie eine hintere Querachse aufschwenkbaren Heckdeckels (1) eines zur Aufnahme eines Daches bzw. Dachteiles (7) sowie von Gepäck (16) dienenden Heckraumes einer Karosserie eines Personenkraftwagens mit wegklappbarem Dach bzw. Dachteil, mit
- in Draufsicht U-förmigem Rahmen (3) mit in Querrichtung ausgerichtetem, am Heck der Karosserie angeordnetem Mittelteil (3") und um die hintere Querachse schwenkbaren U-Schenkeln (3') sowie
- an den U-Schenkeln um die vordere Querachse schwenkbaren Tragteilen (6) des Heckdeckels,
**gekennzeichnet**
**durch** eine den Rahmen (3) halternde und bei Aufschwenkung der Heckklappe (1) um die hintere Querachse bzw. bei entsprechender Schwenkung der U-Schenkel (3') zunächst anhebende Hub-Kipp-Führung (4).

2. Traggestell nach Anspruch 1,
**dadurch gekennzeichnet,**
**daß**
- die Hub-Kipp-Führung als Viergelenksystem (4) mit zwei zu den Querachsen parallelen, voneinander in Vertikalrichtung beabstandeten Gelenkachsen (8,9) an einem stationären Teil der Karosserie und zwei weitere dazu parallelen, voneinander in Vertikalrichtung beabstandeten Gelenkachsen (11,12) an einem rahmenfesten Teil (10) bzw. am Rahmen (3) ausgebildet ist,
- eine die karosserieseitigen Gelenkachsen (8,9) in Achsansicht durchsetzende erste Gerade und eine die rahmenseitigen Gelenkachsen (11,12) durchsetzende zweite Gerade einen nach oben geöffneten Winkel bilden,
- zwischen der oberen Gelenkachse (8,11) am stationären Teil der Karosserie und der oberen Gelenkachse (11) am rahmenfesten Teil (10) bzw. am Rahmen (3) ein erster Lenker (13) und zwischen den beiden anderen Gelenkachsen (9,12) ein gegenüber dem ersten Lenker verkürzter zweiter Lenker (14) angeordnet ist und
- der Rahmen (3) mittels eines Stellaggregates (15) mit einem Drehmoment bezüglich der beiden rahmenseitigen Gelenkachsen (11,12) beaufschlagbar ist.

3. Traggestell nach Anspruch 2,
**dadurch gekennzeichnet,**
**daß** der erste Lenker (13) als winkelförmiger oder bogenförmiger Lenker mit nach abwärts geöffneter Winkelöffnung bzw. Konkavseite ausgebildet ist.

4. Traggestell nach einem der Ansprüche 1 bis 3,
**dadurch gekennzeichnet,**
**daß** die U-Schenkel (3') in Seitenansicht L-förmig ähnlich dem L-förmigen Heckdeckel (1) ausgebildet sind.

5. Traggestell nach einem der Ansprüche 2 bis 4,
**dadurch gekennzeichnet,**
**daß** das Stellaggregat (15) zwischen einem von den rahmenfesten Gelenkachsen (11, 12) entfernten Anlenkpunkt am rahmenfesten Teil (10) und einem karosseriefesten Widerlager angeordnet ist.

6. Traggestell nach einem der Ansprüche 2 bis 5,
**dadurch gekennzeichnet,**
**daß** jedem U-Schenkel des Rahmens (3) ein gesondertes Viergelenksystem (4) zugeordnet und an einem dieser Viergelenksysteme ein einziges Stellaggregat (15) angeordnet ist.

## Claims

1. Supporting framework (2) of a rear cover (1), which can be pivoted about a front transverse axis and a rear transverse axis, of a rear compartment being used to receive a roof or roof part (7) and luggage (16), of a body of a passenger car with a fold-away roof or roof part, comprising
- a frame (3) which is U-shaped in plan view, with a central part (3") oriented in the transverse direction and arranged on the rear of the body, and U-limbs (3') which can be pivoted about the rear transverse axis and
- supporting parts (6) of the rear cover, which are pivotable about the front transverse axis, on the U-limbs,
**characterised by** a lifting/tilting guide (4) which retains the frame (3) and initially lifts it when the rear cover (1) is pivoted about the rear transverse axis or on corresponding pivoting of the U-limbs (3').

2. Supporting framework according to claim 1, **characterised in that**
- the lifting/tilting guide is configured as a four-bar linkage system (4) with two hinge pins (8, 9), which run parallel to the transverse axes and are spaced apart from one another in the vertical direction, on a stationary part of the body, and two further hinge pins (11, 12), parallel thereto and spaced apart from one another in the vertical direction, on a part (10) that is secured to the frame, or on the frame (3),
- a first straight line passing in axial view through the hinge pins (8, 9) on the body side and a second straight line passing through the hinge pins (11, 12) on the frame side form an angle which is upwardly open,
- a first link (13) is arranged between the upper hinge pin (8, 11) on the stationary part of the body and the upper hinge pin (11) on the part (10) secured to the frame or on the frame (3) and a second link (14), which is shorter than the first link, is arranged between the two other hinge pins (9, 12) and
- the frame (3) can be subjected by means of an adjusting unit (15) to a torque with respect to the two hinge pins (11, 12) on the frame side.

3. Supporting framework according to claim 2, **characterised in that** the first link (13) is configured as an angular or curved link with a downwardly open angle opening or concave side.

4. Supporting framework according to any one of claims 1 to 3, **characterised in that** the U-limbs (3') are configured to be L-shaped in the side view similar to the L-shaped rear cover (1).

5. Supporting framework according to any one of claims 2 to 4, **characterised in that** the adjusting unit (15) is arranged between an articulation point on the part (10) secured to the frame, remote from the hinge pins (11, 12) secured to the frame, and an abutment secured to the body.

6. Supporting framework according to any one of claims 2 to 5, **characterised in that** a separate four-bar linkage system (4) is associated with each U-limb of the frame (3) and a single adjusting unit (15) is arranged on one of these four-bar linkage systems.

## Revendications

1. Bâti (2) d'un couvercle arrière (1), susceptible d'être ouvert par pivotement autour d'un axe transversal avant ainsi que d'un axe transversal arrière, d'une malle arrière, servant à recevoir un toit ou une partie de toit (7) ainsi que des bagages (16), d'une carrosserie d'une voiture particulière, avec un toit ou une partie de toit susceptible être écartée par rabattement, avec :
- un cadre (3) en forme en U lorsqu'on observe en vue de dessus, avec une partie centrale (3") orientée en direction transversale, disposée à l'arrière de la carrosserie, et des branches de U (3'), susceptibles de pivoter autour de l'axe transversal arrière, ainsi que
- des parties support (6), du couvercle arrière, susceptibles de pivoter sur les branches de U, autour de l'axe transversal avant,
**caractérisé par** un guidage à levage et basculement (4), maintenant le cadre (3) et, en cas de pivotement d'ouverture du volet arrière (1) autour de l'axe transversal arrière, ou en cas de pivotement correspondant des branches de U (3'), exerçant d'abord un effet de soulèvement.

2. Bâti selon la revendication 1, **caractérisé en ce que**
- le guidage à levage et basculement est réalisé sous la forme de système à quadrilatère articulé (4), avec deux axes d'articulation (8, 9), parallèles aux axes transversaux, espacés l'un de l'autre en direction verticale, sur une partie stationnaire de la carrosserie, et deux autres axes d'articulation (11, 12) parallèles, espacés l'un de l'autre en direction verticale, sur une partie (10) fixée au cadre ou sur le cadre (3),
- une première droite, passant par les axes d'articulation (8, 9) situés côté carrosserie, en observant en vue axiale, et une deuxième droite passant par les axes d'articulation (11, 12) situés côté cadre, forment un angle ouvert vers le haut,
- entre l'axe d'articulation (8, 11) supérieur sur la partie stationnaire de la carrosserie et l'axe d'articulation (11) supérieur sur la partie fixée au cadre (10) ou sur le cadre (3) est disposé un premier bras articulé (13) et, entre les deux autres axes d'articulation (9, 12), est disposé un deuxième bras articulé (14) plus court que le premier bras articulé, et
- le cadre (3) est susceptible d'être sollicité au moyen, d'un groupe d'asservissement (15), avec un couple de rotation par rapport aux deux axes d'articulation (11, 12) situés côté cadre.

3. Bâti selon la revendication 2, **caractérisé en ce que** le premier bras articulé (13) est réalisé sous la forme de bras articulé en forme de cornière, ou en forme d'arc, avec une ouverture d'angle, ou un côté concave ouvert vers le bas.

4. Bâti selon l'une des revendications 1 à 3, **caractérisé en ce que** les branches de U (3') sont réalisées en forme de L observées en vue de côté, de façon analogue au couvercle arrière (1) en forme de L.

5. Bâti selon l'une des revendications 2 à 4, **caractérisé en ce que** le groupe de réglage (15) est disposé entre un point d'articulation, distant des axes d'articulation (11, 12) fixés au cadre, sur la partie (10) fixée au cadre, et un contre-palier, fixé à la carrosserie.

6. Bâti selon l'une des revendications 2 à 5, **caractérisé en ce qu'**à chaque branche de U du cadre (3) est associé un système à quadrilatère articulé (4) séparé et, sur l'un de ces systèmes à quadrilatère articulé, est disposé un groupe de réglage (15) unique.
